# EUROPÄISCHE PATENTSCHRIFT

(11) **EP 0 603 834 B1**
(45) Veröffentlichungstag und Bekanntmachung des Hinweises auf die Patenterteilung: **01.05.1996**
(21) Anmeldenummer: 93120631.2
(22) Anmeldetag: 21.12.1993
(51) Int. Cl.: B60J 7/06

(54) **Faltdach für Fahrzeuge**
Folding roof for vehicle
Toit pliant pour véhicule

(30) Priorität: 21.12.1992 JP 340490/92
(43) Veröffentlichungstag der Anmeldung: 29.06.1994
(73) Patentinhaber: WEBASTO KAROSSERIESYSTEME GmbH, D-82131 Stockdorf (DE)
(72) Erfinder: Kurokawa, Kazuhiro, Higashi-Hiroshima-shi, Hiroshima (JP)
(74) Vertreter: Wiese, Gerhard

(56) Entgegenhaltungen:
- EP-A- 0 376 208
- EP-A- 0 494 356
- DE-A- 3 939 524

## Beschreibung

Die Erfindung betrifft ein Faltdach für Fahrzeuge zum wahlweisen Verschließen oder mindestens teilweisen Freigeben einer in einer festen Dachfläche ausgebildeten Dachöffnung, mit einem Verdeck, das mit einer wechselnden Folge von Faltspriegeln und Führungsspriegeln verbunden ist, wobei die Führungsspriegel beidseits an je einem entlang einer Längsführung verschiebbaren Führungsspriegelschieber abgestützt sind und die Faltspriegel beidseits über je ein Koppelglied mit einem gleichfalls in Verdecklängsrichtung verstellbaren Schlitten bzw. einem der Führungsspriegelschieber derart gekoppelt sind, daß das Verdeck durch Verschieben des Schlittens beim Schließen gefaltet bzw. beim Öffnen gestreckt wird.

Ein Faltdach dieser Art ist aus DE-A-3 939 524 und aus der japanischen Gebrauchsmusterveröffentlichung 339292 bekannt und in Fig. 11 schematisch dargestellt. Das bekannte Faltdach weist ein flexibles Verdeck 43 zum Abdecken einer Dachöffnung 42 in einer Dachfläche 41 eines Kraftfahrzeugs auf. Führungsschienen 44 verlaufen zu beiden Seiten der Dachöffnung 42. Ein vorderer Verschlußspriegel 46 ist mit einem Schlitten 45 gekoppelt, der entlang der Führungsschiene 44 verstellt werden kann. Das vordere Ende des Verdecks 43 ist mit dem hinteren Ende des vorderen Verschlußspriegels 46 verbunden, während das hintere Ende des Verdecks an einem hinteren Verschlußspriegel 47 angebracht ist. Zwischen den Verschlußspriegeln 46, 47 ist das Verdeck 43 auf einer wechselnden Folge von Führungsspriegeln 48 und Faltspriegeln 50 abgestützt, wobei die Fühtungsspriegel 48 entlang der Führungsschiene 44 verstellbar sind und die Faltspriegel 50 mit dem jeweils davorliegenden Führungsspriegel 48 bzw. dem Schlitten 45 über ein Koppelglied 49 schwenkbar verbunden sind. Eine Zugfeder 51 erstreckt sich zwischen dem Schlitten 45 bzw. den Führungsspriegeln 48 und dem hintenliegenden Teil des zugehörigen Koppelgliedes 49. Die Zugfedern 51 suchen die Faltspriegel 50 nach oben auszustellen.

Wenn der Schlitten 45 mittels einer nicht veranschaulichten Antriebsvorrichtung nach hinten bewegt wird, wird das Verdeck 43 gefaltet, um die Dachöffnung 42 freizulegen. Durch Verstellen des Schlittens 45 nach vorne läßt sich das Verdeck 43 strecken, um die Dachöffnung 42 zu verschließen.

Bei dem vorstehend skizzierten bekannten Faltdach sind die Faltspriegel 50 mittels der Zugfeder 51 nach oben vorgespannt. Dadurch ergeben sich Probleme hinsichtlich der Abdichtung zwischen dem Verdeck 43 und der festen Dachfläche 41. Außerdem kann es bei hohen Fahrgeschwindigkeiten leicht zu einem Flattern des Verdecks 43 kommen. Daneben ist der Gleitwiderstand hoch, wenn das Verdeck von dem voll geöffneten Zustand in den voll geschlossenen Zustand bewegt wird.

Mit der vorliegenden Erfindung sollen die vorstehend geschilderten Schwierigkeiten ausgeräumt werden. Insbesondere ist es eine Aufgabe der Erfindung, ein Faltdach zu schaffen, dessen Verdeck in Falten gelegt werden kann, ohne daß die betreffenden Faltspriegel nach oben vorgespannt sind. Die Dichteigenschaften bei geschlossenem Verdeck sollen verbessert werden. Ein Flattern des Verdecks soll auch bei hoher Fahrgeschwindigkeit ausgeschlossen sein. Das Verdeck soll sich leichtgängig öffnen und schließen lassen.

Ein Faltdach für Fahrzeuge zum wahlweisen Verschließen oder mindestens teilweisen Freigeben einer in einer festen Dachfläche ausgebildeten Dachöffnung, mit einem Verdeck, das mit einer wechselnden Folge von Faltspriegeln und Führungsspriegeln verbunden ist, wobei die Führungsspriegel beidseits an je einem entlang einer Längsführung verschiebbaren Führungsspriegelschieber abgestützt sind und die Faltspriegel beidseits über je ein Koppelglied mit einem gleichfalls in Verdecklängsrichtung verstellbaren Schlitten bzw. einem der Führungsspriegelschieber derart gekoppelt sind, daß das Verdeck durch Verschieben des Schlittens beim Schließen gestreckt bzw. beim Öffnen gefaltet wird, ist erfindungsgemäß gekennzeichnet durch den Koppelgliedern zugeordnete Koppelgliedschieber, die sowohl verschwenkbar als auch entlang der Längsführung verschiebbar sind und die mit dem jeweils zugehörigen Koppelglied über eine Höhenverstellvorrichtung verbunden sind, die für eine Höhenverstellung des betreffenden Koppelgliedes in Abhängigkeit von einer gegenseitigen Längsbewegung von Koppelglied und Höhenverstellvorrichtung sorgt; durch einen mit den Koppelgliedschiebern zusammenwirkenden, mit Bezug auf die Längsführung feststehenden Anschlag, der bei geschlossenem Verdeck auf der in Öffnungsrichtung liegenden Seite der Koppelgliedschieber sitzt; und durch eine Anschlagfreigabevorrichtung zum Lösen des gegenseitigen Eingriffs zwischen den einzelnen Koppelgliedschiebern und dem Anschlag, wenn der zugehörige Schlitten bzw. Führungsspriegelschieber in Öffnungsrichtung verstellt und näher an den betreffenden Koppelgliedschieber herangebracht wird.

Vorzugsweise ist ferner eine Verriegelungsvorrichtung vorgesehen, die ein Absenken eines ausgestellten Koppelgliedes verhindert, wenn der zugehörige Schlitten bzw. Führungsspriegelschieber in Öffnungsrichtung verstellt und noch näher an den betreffenden Koppelgliedschieber herangebracht wird.

Wenn bei dem erfindungsgemäßen Faltdach das flexible Verdeck von dem voll geschlossenen Zustand in den voll geöffneten Zustand überführt wird, bewegen sich der Schlitten und die Führungsspriegelschieber nach hinten. Die Koppelglieder und die Koppelgliedschieber werden im Zuge der Rückwärtsbewegung des Schlittens und der Führungsspriegelschieber gleichfalls nach hinten verstellt. Die Koppelglieder werden dabei um die Koppelstelle mit dem Schlitten bzw. dem zugehörigen Führungsspriegelschieber mittels der Höhenverstellvorrichtung nach oben verschwenkt, wenn der Koppelgliedschieber mit dem feststehenden Anschlag in Eingriff kommt. Dabei wird der Faltspriegel ausgestellt; das Verdeck wird in Falten gelegt.

Bei der Höhenverstellvorrichtung kann es sich vorzugsweise um eine Kulissenführung bestehend aus einem Kulissenschlitz und einem entlang dem Kulissenschlitz verstellbaren Kulissenstift handeln.

Wenn der Schlitten bzw. der Führungsspriegelschieber mit dem zugehörigen Koppelgliedschieber in Kontakt kommt, bewirkt die Anschlagfreigabevorrichtung ein Nachvornekippen des Koppelgliedschiebers, wodurch der gegenseitige Eingriff zwischen dem Koppelgliedschieber und dem Anschlag gelöst wird. Nahezu gleichzeitig bewirkt die Verriegelungsvorrichtung ein Verriegeln des Koppelgliedes in der ausgestellten Lage. Der Schlitten bzw. der Führungsspriegelschieber und der zugehörige Koppelgliedschieber bewegen sich jetzt gemeinsam nach hinten, wobei weiter hinten liegende Faltspriegel in entsprechender Weise ausgestellt werden, um das Verdeck in den voll geöffneten Zustand zu bringen.

Wenn das flexible Verdeck von dem voll geöffneten Zustand in den voll geschlossenen Zustand gebracht wird, trennt sich der Schlitten bzw. der Führungsspriegelschieber von dem zugehörigen Koppelgliedschieber, während das Verdeck hinter dem Faltspriegel aufgrund von dessen Vorwärtsbewegung gestreckt wird. Die Verriegelungsvorrichtung wird gelöst, und die Anschlagfreigabevorrichtung wird betätigt. Wenn die Höhenverstellvorrichtung als Kulissenführung mit Kulissenstift und Kulissenschlitz ausgebildet ist, zieht das Koppelglied den Koppelgliedschieber nach vorne, wenn der Kulissenstift das hintere Ende des Kulissenschlitzes erreicht und der Faltspriegel voll abgesenkt ist. Der Koppelgliedschieber überläuft den Anschlag und bewegt sich nach vorne in die voll geschlossene Stellung.

Im voll geschlossenen Zustand des flexiblen Verdecks stehen die Faltspriegel über das zugehörige Koppelglied, den Koppelgliedschieber und die Höhenverstellvorrichtung mit der Längsführung in Eingriff. Eine Aufwärtsbewegung der Faltspriegel wird verhindert. Die Abdichtung zwischen dem Verdeck und der festen Dachfläche bleibt zuverlässig erhalten. Das Verdeck flattert selbst bei hoher Fahrgeschwindigkeit nicht.

Ein bevorzugtes Ausführungsbeispiel der Erfindung ist nachfolgend anhand der beiliegenden Zeichnungen näher erläutert. Es zeigen:
- Fig. 1: einen schematischen Längsschnitt eines erfindungsgemäßen Faltdachs bei voll geschlossenem Verdeck,
- Fig. 2: einen Längsschnitt durch das Faltdach der Fig. 1 im voll geöffneten Zustand,
- Fig. 3: in größerem Maßstab einen Teillängsschnitt des Daches im voll geöffneten Zustand,
- Fig. 4: eine Draufsicht auf die Anordnung gemäß Fig. 3,
- Fig. 5: einen Querschnitt entlang der Linie B-B der Fig. 4,
- Fig. 6: einen Querschnitt entlang der Linie C-C der Fig. 4,
- Fig. 7: eine auseinandergezogene perspektivische Ansicht der Anordnung gemäß Fig. 3,
- Fign. 8, 9 und 10: Teillängsschnitte entsprechend Fig. 3 in verschiedenen Stadien des Öffnungsvorganges und

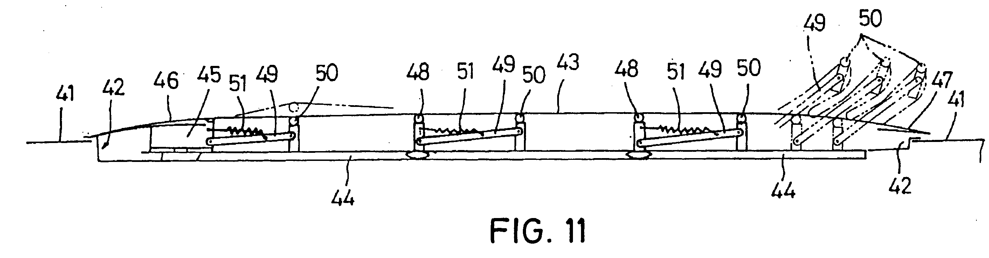

- Fig. 11: einen schematischen Längsschnitt eines bekannten Faltdaches.

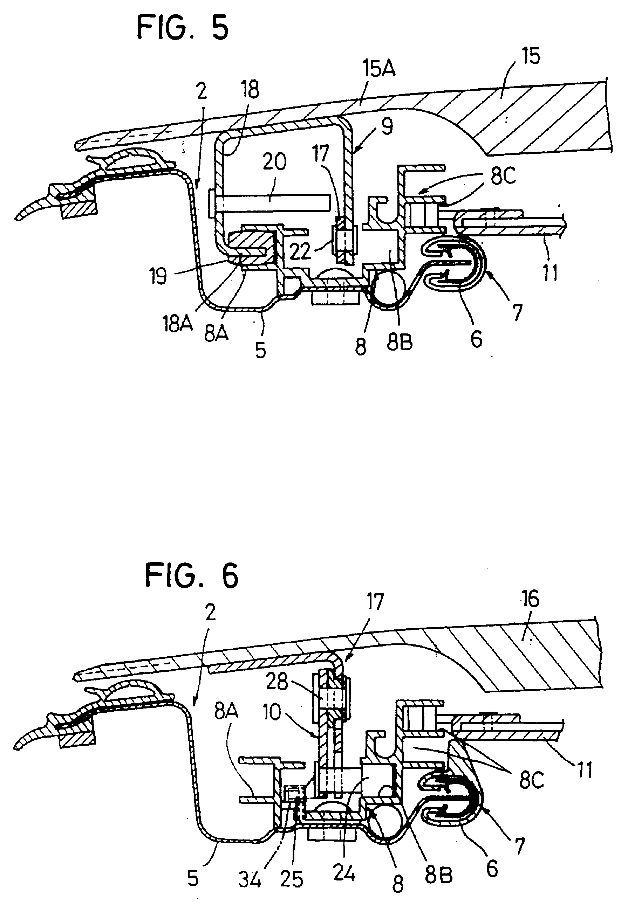

Das in den Figuren insgesamt mit 1 bezeichnete Faltdach weist ein flexibles Verdeck 4 auf, das es erlaubt, eine in einer Dachfläche 2 eines Kraftfahrzeuges oder dergleichen ausgebildete Dachöffnung 3 wahlweise zu verschließen oder mindestens teilweise freizugeben. Ein Dachrahmen 5, der eine Wasserrinne bildet, erstreckt sich um den Umfangsrandteil der Dachöffnung 3. Auf den Innenumfangsrand des Dachrahmens 5 ist eine Verkleidung 6 aufgesteckt, die eine Rahmenöffnung 7 begrenzt. Auf den Dachrahmen 5 sind zu beiden Seiten der Dachöffnung 3 Führungsschienen 8 aufgesetzt, die sich in Längsrichtung erstrecken. Die Führungsschienen 8 bilden drei parallele Führungen 8A, 8B und 8C. In der mit Bezug auf die Rahmenöffnung 7 außenliegenden Führung 8A sind Führungsspriegelschieber 9 in Längsrichtung frei verschiebbar geführt (Fig. 5). Die Führung 8B, die sich ebenso wie die Führung 8A nach außen öffnet, dient dem Führen von Koppelgliedschiebern 10 (Fig. 6). In der sich nach innen öffnenden Führung 8C ist ein Schiebehimmel 11 längsverschiebbar geführt. Beide Schieber 9 und 10 erstrecken sich zwischen die Führungen 8A und 8B.

Ein funktionsmäßig im wesentlichen einem Führungsspriegel entsprechender, sich quer über die Dachöffnung 3 erstreckender vorderer Verschlußspriegel 12 ist in Längsrichtung verschiebbar gelagert und mit einem Schlitten 13 gekoppelt, der funktionsmäßig einem Führungsspriegelschieber vergleichbar ist. Ein hinterer Verschlußspriegel 14 ist im Bereich des hinteren Endes der Dachöffnung 3 fest angebracht. Der vordere Endabschnitt des Verdecks 4 ist auf dem hinteren Ende des vorderen Verschlußspriegels 12 angebracht, während der hintere Endabschnitt des Verdecks 4 mit dem vorderen Endteil des hinteren Verschlußspriegels 14 verbunden ist. Es ist eine nicht veranschaulichte Antriebsvorrichtung, beispielsweise in Form eines Kabelantriebes oder dergleichen, vorgesehen, um den Schlitten 13 entlang der Führung 8A der Führungsschienen 8 zu verstellen.

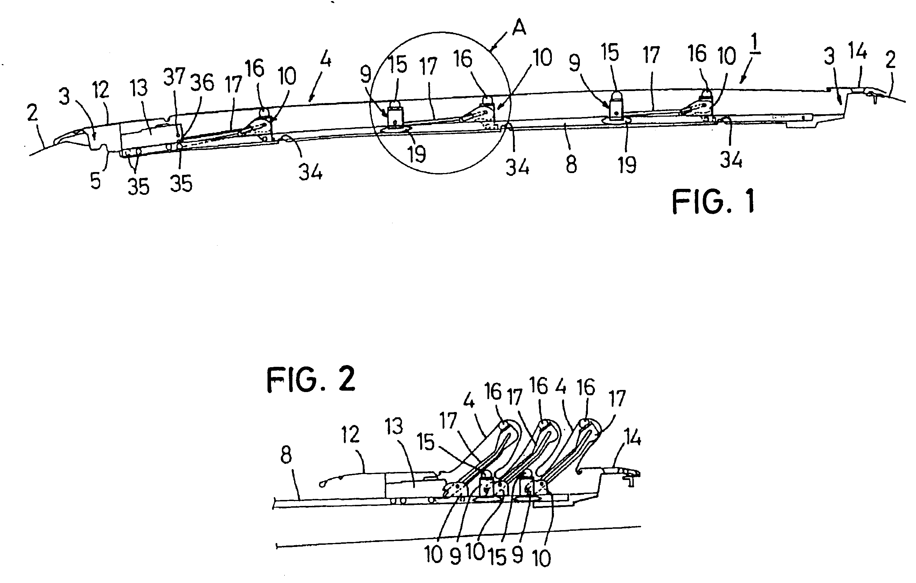

Das Verdeck 4 ist zwischen dem vorderen Verschlußspriegel 12 und dem hinteren Verschlußspriegel 14 auf einer wechselnden Folge von Führungsspriegeln 15 und Faltspriegeln 16 abgestützt, die mithelfen, das Verdeck beim Schließen zu strecken bzw. beim Öffnen zu falten. In Längsrichtung aufeinanderfolgende Paare aus je einem Führungsspriegel 15 und einem Faltspriegel 16 sind über ein Koppelglied 17 untereinander gekoppelt, um auf diese Weise eine Einheit zu bilden. Der vorderste Faltspriegel 16 ist entsprechend mit dem Schlitten 13 gekoppelt (Fign. 1 und 2).

Die Führungsspriegelschieber 9 bestehen aus einem im wesentlichen umgekehrt U-förmig gebogenen Bügel 18, einem Gleitschuh 19 und einem Stift 20. Der Gleitschuh 19 sitzt auf einem nach innen abgewinkelten Schenkel 18A am äußeren unteren Ende des Bügels 18. Der Stift 20 ist mit der Seite des Bügels 18 verbunden, an welcher der den Gleitschuh 19 tragende Schenkel 18A ausgebildet ist. Der Stift 12 erstreckt sich in Querrichtung von dort in Richtung auf den gegenüberliegenden Flansch des Bügels 18. Aufgabe des Stifts 20 ist es, wie im folgenden noch näher erläutert, den Koppelgliedschieber 10 des zugehörigen Koppelgliedes 17 zu kippen und zu positionieren.

An beiden Enden der Führungsspriegel 15 ist ein flacher Montageteil 15A ausgebildet, der auf der Oberseite des Bügels 18 aufliegt und dort über Befestigungsmittel 21, beispielsweise in Form von Nieten oder Schrauben, gehalten wird. Das vordere Ende des Koppelglieds 17 ist auf einem Gelenkstift 22 schwenkbar gelagert. Der Gelenkstift 22 ist mit dem dem Schenkel 18A gegenüberliegenden Seitenflansch des Bügels 18 verbunden. Der Gleitschuh 19 greift in die Führung 8A der Führungsschiene 8 ein, und er läßt sich in Längsrichtung der Führungsschiene verschieben, wobei zweckmäßig dafür gesorgt ist, daß kein Spiel in lotrechter Richtung auftritt.

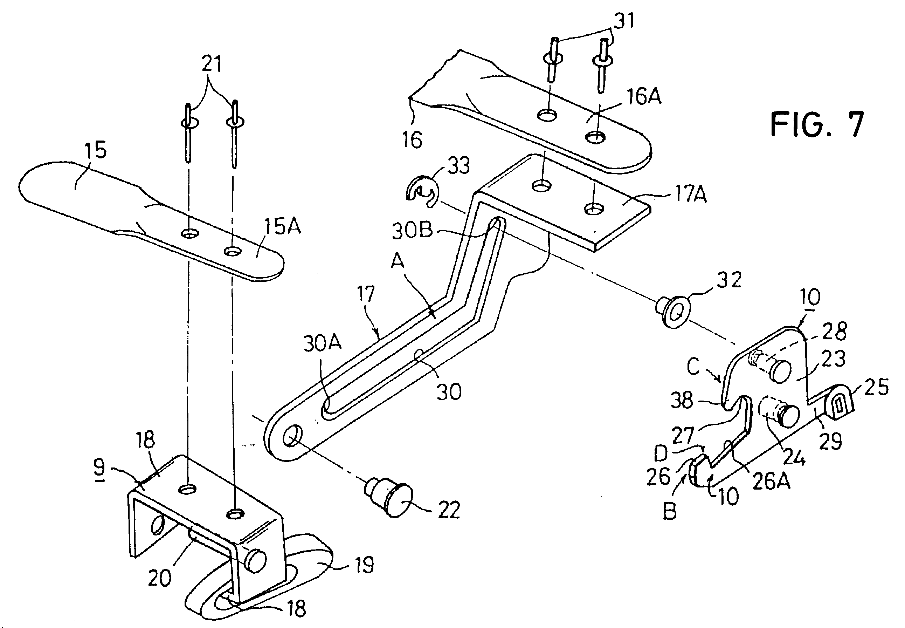

Der Koppelgliedschieber 10 besteht, wie insbesondere aus den Figuren 6 und 7 hervorgeht, aus einer lotrecht stehenden Platte 23, einer Führungsrolle 24, die an der Platte um eine quer zur Platte stehende Achse drehbar gelagert ist, und einem Anlageteil 25. Von dem unteren vorderen Ende der Platte 23 steht eine Schwenknase nach oben vor. Hinter der Schwenknase 26 ist in der Platte 23 eine mit dem Stift 20 zusammenwirkende Aufnahme 26A ausgebildet, die eine nach hinten ansteigende Nockenfläche aufweist. An die Aufnahme 26A schließt hinten eine weitere Aufnahme 27 an, deren Begrenzungsfläche von der Nockenfläche der Aufnahme 26A relativ steil nach hinten ansteigt. Ein Kulissenstift 28 ist gleichfalls an der Platte 23 angebracht. Der Kulissenstift 28 erstreckt sich parallel zu den Führungsrolle 24 quer zur Verschieberichtung des Koppelgliedschiebers 10 und ebenso wie die Führungsrolle 24 auf der Innenseite der Platte 23. Die Platte 23 läßt sich um die Führungsrolle 24 kippen.

Ein Anlageteilträger 29 steht von dem hinteren unteren Ende der Platte 23 des Koppelgliedschiebers 10 nach hinten vor. Das freie Ende des Trägers 29 ist nach außen, das heißt zu der zu dem Kulissenstift 28 entgegengesetzten Seite, abgewinkelt und trägt dort das Anlageteil 25.

Wie aus Fig. 7 zu ersehen ist, ist das Koppelglied 17 an seinem hinteren oberen Ende rechtwinklig abgebogen, um eine Spriegelhalterung 17A zu bilden. In dem Koppelglied 17 ist ein Kulissenschlitz 30 ausgebildet. Der Kulissenschlitz 30 weist einen vorderen Teil und einen an dessen hinteres Ende anschließenden, schräg nach hinten und oben abgewinkelten hinteren Teil auf. An beiden Enden der Faltspriegel 16 befinden sich abgeflachte Montageteile 16A. Das Montageteil 16A liegt auf der Spriegelhalterung 17A auf und wird dort mit Hilfe von Befestigungsmitteln 31, beispielsweise Nieten oder Schrauben, festgehalten.

Auf den an dem Koppelgliedschieber 10 angebrachten Kulissenstift 28 ist eine Buchse 32 aufgesetzt. Der Kulissenstift 30 und die Buchse 32 erstrecken sich durch den Kulissenschlitz 30 hindurch und sind entlang dem Kulissenschlitz verschiebbar. Ein auf das freie Ende des Kulissenstifts 28 aufgesetzter Sicherungsring 33 verhindert, daß der Kulissenstift 28 und der Kulissenschlitz 30 außer Eingriff kommen.

Das Koppelglied 17 wird von dem Koppelgliedschieber 10 über den Kulissenstift 28 abgestützt. In Abhängigkeit von einer gegenseitigen Verschiebebewegung von Kulissenstift 28 und Kulissenschlitz 30 wird das Koppelglied 17 in einer lotrechten Ebene um den Gelenkstift 22 verschwenkt, um auf diese Weise den Faltspriegel 16 anzuheben und abzusenken. Eine in den Figuren 7, 8 und 9 insgesamt mit A bezeichnete Höhenverstellvorrichtung zum Anheben und Absenken des Koppelgliedes 17 umfaßt den Kulissenstift 28 und den Kulissenschlitz 30. Die Höhenverstellvorrichtung A wird aufgrund einer Relativbewegung zwischen dem Koppelgliedschieber 10 und dem Koppelglied 17 wirksam.

Im voll geöffneten Zustand des Verdecks 4 befindet sich der Kulissenstift 28 am vorderen Ende 30A des Kulissenschlitzes 30 des Koppelgliedes 17, wodurch die maximal ausgestellte Position des Faltspriegels 16 vorgegeben ist. Im voll geschlossenen Zustand des Verdecks liegt dagegen der Kulissenstift 28 am hinteren Ende 30B des Kulissenschlitzes 30 des Koppelglieds 17 an, wodurch das Absenken des Faltspriegels 16 begrenzt wird. Letzteres verhindert unkontrollierte Auf- und Abbewegungen des Faltspriegels selbst bei Fahrt mit hoher Geschwindigkeit. Einem Flattern des Verdecks 4 wird dadurch wirkungsvoll vorgebeugt.

Ein Anschlag 34 steht von der Innenseite der Führung 8A jeder Führungsschiene 8 jeweils in einem Bereich nach oben vor, der von dem Anlageteil 25 des Koppelgliedschiebers 10 überlaufen wird und der sich hinter dem Anlageteil 25 befindet, wenn der Koppelgliedschieber 10 in der voll geschlossenen Stellung steht. Der Anschlag 34 kann erst dann außer Eingriff mit dem Anlageteil 25 kommen, wenn der Koppelgliedschieber 10 nach vorne gekippt ist. Das Anlageteil 25 kann jedoch den Anschlag 34 überlaufen, ohne daß das Anlageteil 25 nach vorne gekippt wird, wenn der Koppelgliedschieber 10 sich nach vorne bewegt. Der am vorderen Ende des Verdecks 4 sitzende Schlitten 13 ist mit mehreren Führungsrollen 35 versehen. Das vordere Ende des vordersten Koppelgliedes 17 ist mit dem Schlitten 13 über einen Gelenkstift 36 schwenkbar verbunden. Ein Stift 37 dient dem Kippen des zugeordneten Koppelgliedschiebers 10 und entspricht damit funktionsmäßig dem vorstehend erläuterten Stift 20.

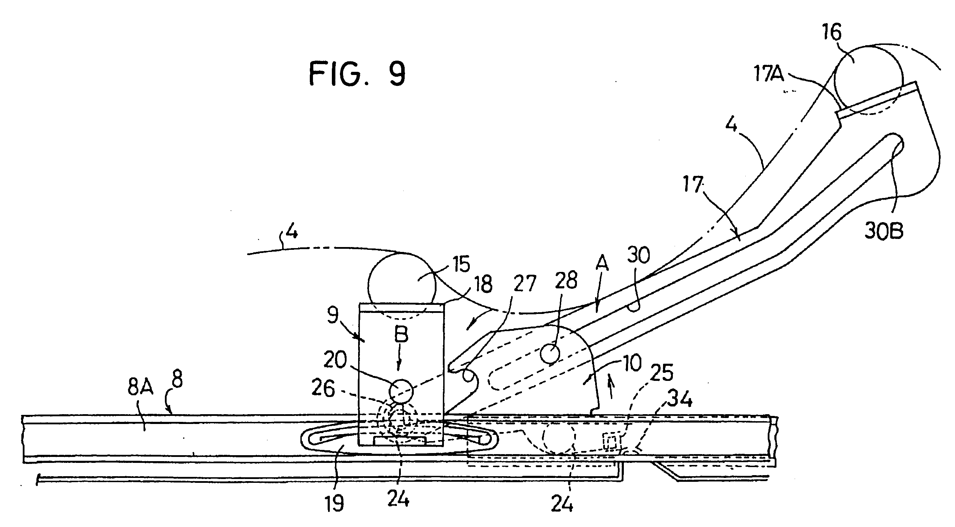

Die am vorderen Ende des Koppelgliedschiebers 10 sitzende Schwenknase 26 kommt mit dem Stift 20 des zugehörigen Führungsspriegelschiebers 9 in Kontakt und wird nach unten gedrückt, wenn der Führungsspriegelschieber 9 nach hinter näher an den Koppelgliedschieber 10 heranbewegt wird. Der Koppelgliedschieber 10 wird um die Führungsrolle 24 nach vorne gekippt, und das Anlageteil 25 kommt außer Eingriff mit dem Anschlag 34. In Fig. 9 ist dabei eine die Schwenknase 26 und den Stift 20 einschließende Anschlagfreigabevorrichtung insgesamt mit B bezeichnet.

Der Stift 20 überträgt auf den Koppelgliedschieber 10 bei weiterem Nach-Hinten-Bewegen des Führungsspriegelschiebers 9 keine Kraft, wenn die Schwenknase 26 nach unten gedrückt wird, bis nach Durchlaufen der Aufnahme 26A der Stift die Aufnahme 27 erreicht.

Die Aufnahme 27 ist nach hinten und oben geneigt, wenn der Koppelgliedschieber 10 nicht nach vorne gekippt ist, und das hintere obere Ende der Aufnahme 27 (bzw. die entsprechende Nut) liegt etwas höher als die Schwenknase 26. Wenn der Stift 20 auf den Koppelgliedschieber 10 trifft, wird der Koppelgliedschieber 10 durch den Kontakt des Stifts 20 mit der schrägen Nockenfläche gekippt, bis das Anlageteil 25 über den Anschlag 34 hinweggleitet. Die Aufnahme 27 bildet auf diese Weise gleichfalls einen Teil der Anschlagfreigabevorrichtung B. Wenn der Stift 20 schließlich das hintere obere Ende der Aufnahme 27 erreicht, wird der Koppelgliedschieber 10 von dem Führungsspriegelschieber 9 nach hinten mitgenommen.

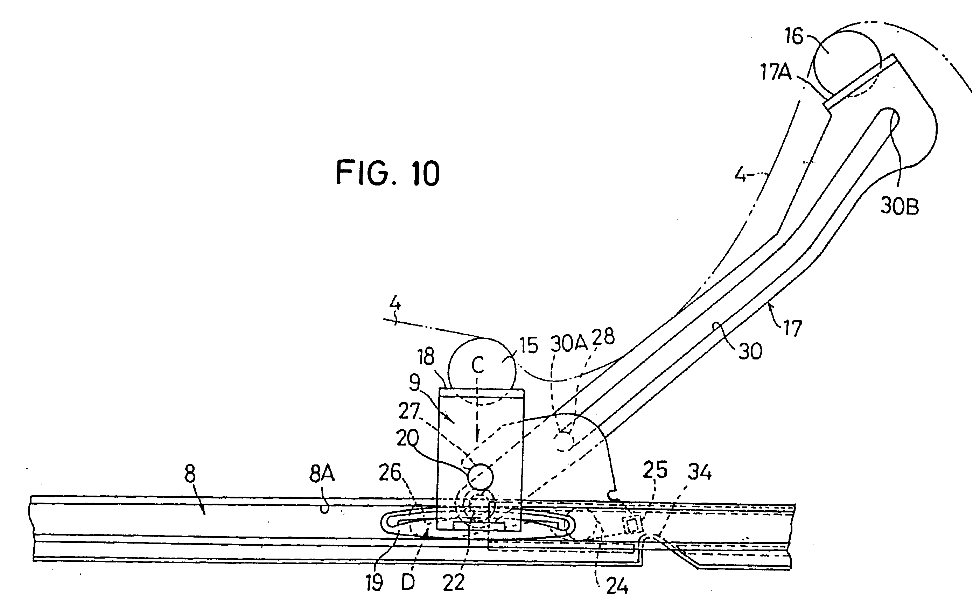

Nahe dem oberen Ende der Aufnahme 27 des Koppelgliedschiebers 10 befindet sich eine Positioniernase 38, die nach vorne und unten ragt. Die Positioniernase 38 verläuft dabei vom hinteren oberen Ende der Aufnahme 27 schräg nach vorne und unten. Auf den Kulissenstift 28 wird eine Schubkraft durch den Kulissenschlitz 30 übertragen. Infolgedessen wird verhindert, daß die Aufnahme 27 und der Stift 20 leicht außer Eingriff miteinander kommen; das Koppelglied 17 wird in ausgestelltem Zustand festgehalten. Die das Koppelglied 17 ausgestellt haltende Verriegelungsvorrichtung ist in den Figuren 7 und 10 insgesamt mit C bezeichnet. Zu ihr gehören insbesondere die Positioniernase 38, die Aufnahme 27 und der Stift 20.

Wenn der Führungsspriegelschieber 9 nach vorne bewegt wird, kann der Stift 20 die Positioniernase 38 anheben. Dabei wird der Koppelgliedschieber 10 geringfügig verschwenkt, und die Verriegelungsvorrichtung C wird freigegeben. Der Stift 20 gelangt dann in die Aufnahme 26A, wobei der Koppelgliedschieber 10 sich dann zusammen mit dem Führungsspriegelschieber 9 nach vorne bewegen kann. Die für eine Mitnahme nach vorne sorgende Vorrichtung ist in Fig. 7 ingesamt mit D bezeichnet, und zu ihr gehören die Aufnahme 26A und der Stift 20.

Die Funktionsweise des vorstehend beschriebenen Faltdachs ist wie folgt:
Fig. 1 zeigt den voll geschlossenen Zustand des Verdecks 4, während das Verdeck 4 in Fig. 2 im voll geöffneten Zustand wiedergegeben ist. Im voll geschlossenen Zustand gemäß Fig. 1 stehen der vordere Verschlußspriegel 12, die Führungsspriegel 15 und die Faltspriegel 16 über den Schlitten 13 bzw. die Führungsspriegelschieber 9 und die Koppelgliedschieber 10 mit den Führungen 8A und 8B der Führungsschiene 8 in Eingriff. Das Verdeck ist in gestrecktem Zustand gehalten und sorgt für ein dichtes Verschließen der Öffnung 3 in der Dachfläche 2. Die Führungsspriegel 15, die Faltspriegel 16 und andere Verdeckteile werden während der Fahrt an Flatterbewegungen gehindert. Es kann zu keinem Spiel oder Flattern des Verdecks 4 kommen.

Wenn das Verdeck 4 voll geöffnet werden soll, wird der Schlitten 13 mittels der nicht veranschaulichten Antriebsvorrichtung nach hinten bewegt. Dabei wird der vordere Verschlußspriegel 12 nach hinten mitgenommen; das Verdeck 4 wird in Falten gelegt. Dabei werden die Koppelglieder 17 durch die Verstellbewegung des Schlittens 13 und der Führungsspriegelschieber 9 nach hinten mitgenommen. Wenn die einzelnen Koppelgliedschieber 10 durch den Anschlag 34 gestoppt werden, schwenkt das Koppelglied 17 durch das Zusammenwirken von Kulissenstift 28 und Kulissenschlitz 30 nach oben; der betreffende Faltspriegel 16 wird ausgestellt.

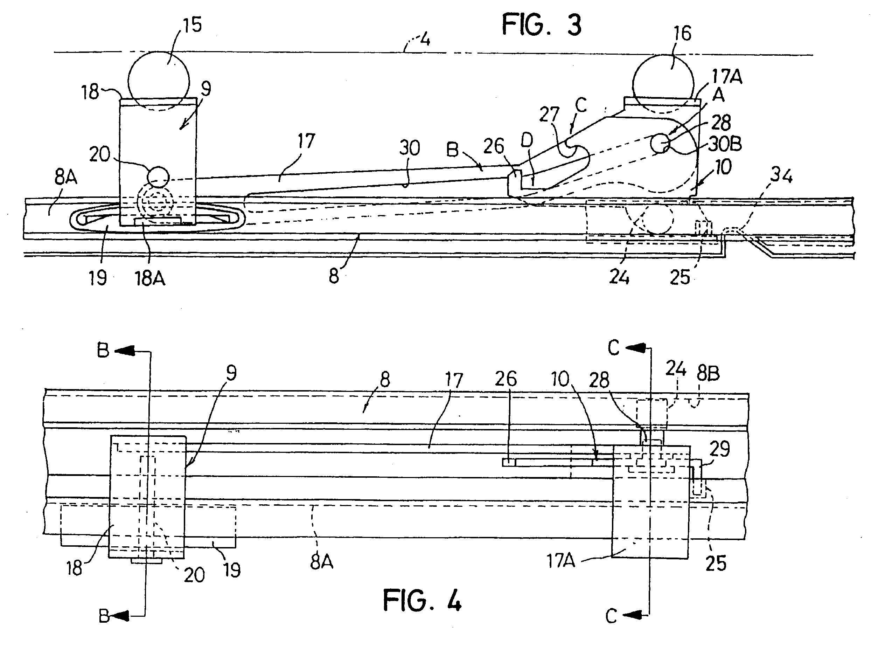

Da die Bewegung des Schlittens 13 die gleiche ist wie die Bewegung der nachfolgenden Führungsspriegelschieber 9, nachdem der Schlitten 13 mit dem dahinterliegenden Führungsspriegelschieber 9 über den dazwischen befindlichen Koppelgliedschieber 10 in Kontakt gekommen ist, stützt sich die nachfolgende Erläuterung auf die Figuren 3, 4 und 8 bis 10.

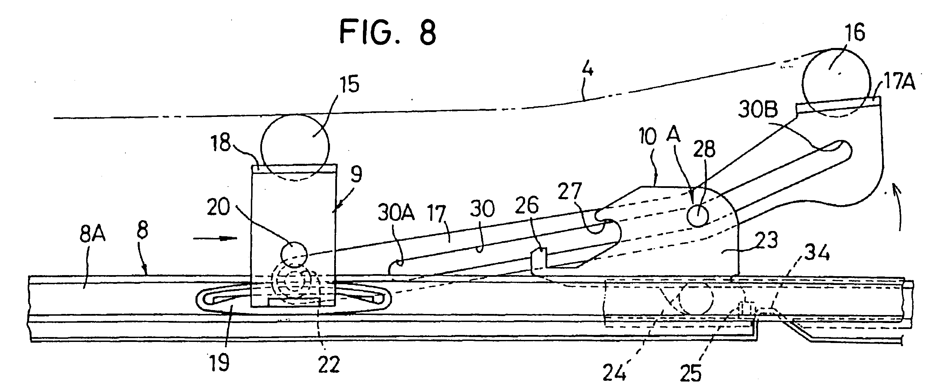

Die Fign. 3 und 4 zeigen den voll geschlossenen Zustand. Nachdem der Schlitten 13 bzw. die anderen Führungsspriegelschieber 9 ihre Bewegung nach hinten beginnen, wird der Koppelgliedschieber 10 durch den Eingriff zwischen dem Anlageteil 25 und dem Anschlag 34 gemäß Fig. 8 angehalten. Das Koppelglied 17 schwenkt dann nach oben, und der Faltspriegel 16 wird ausgestellt.

Der Führungsspriegelschieber 9 bewegt sich weiter nach hinten. Dabei kommt der Stift 20 mit der Schwenknase 26 des Koppelgliedschiebers 10 in Eingriff (Fig. 9); die Nase 26 wird nach unten gedrückt. Der Koppelgliedschieber 10 wird nach vorne gekippt, wobei die Führungsrolle 24 die Schwenkachse bildet. Der Stift 20 tritt bei weiterem Verstellen des Führungsspriegelschiebers 9 nach hinten in die Aufnahme 27 der Platte 23 ein, und er legt sich gegen diese Aufnahme an, während der Kulissenstift 28 das vordere Ende 30A des Kulissenschlitzes 30 erreicht (Fig. 10).

Fig. 10 zeigt den Zustand, in dem der Faltspriegel 16 voll ausgestellt ist. In diesem Zustand ist das Anlageteil 25 völlig außer Eingriff mit dem Anschlag 34, und ein Absenken des Faltspriegels 16 wird durch die Positioniernase 38 verhindert. Der Führungsspriegelschieber 9 und der Koppelgliedschieber 10 bewegen sich jetzt gemeinsam nach hinten. Der Koppelgliedschieber 10 kommt dann mit dem nach hinten nächstfolgenden Führungsspriegelschieber 9 in Kontakt, worauf sich der zuvor erläuterte Arbeitsvorgang wiederholt. Wenn die Spriegelschieber 9, 10 und der Schlitten 13 ihre hintere Endstellung erreichen, ist das Verdeck 4 entsprechend Fig. 2 in geordnete Falten gelegt; die Dachöffnung 3 ist maximal freigelegt.

Wenn der Schlitten 13 mittels der nicht veranschaulichten Antriebsvorrichtung nach vorne verstellt wird, um das Verdeck von dem voll geöffneten Zustand gemäß Fig. 2 in den voll geschlossenen Zustand gemäß Fig. 1 zu überführen, kommt zunächst der Stift 37 des Schlittens 13 außer Eingriff mit der Aufnahme 27 des zugehörigen Koppelgliedschiebers 10, und der Stift 37 legt sich in die Aufnahme 26A ein. Dadurch werden der Schlitten 13 und der zugehörige Koppelgliedschieber 10 miteinander gekoppelt, und sie bewegen sich gemeinsam nach vorne. Wenn das Anlageteil 25 über den Anschlag 34 läuft, wird der Koppelgliedschieber 10 nach vorne gekippt. Der Stift 37 wird außer Eingriff mit der Aufnahme 26A gebracht, und nur der Schlitten 13 bewegt sich weiter nach vorne. Zusammen mit dem Schlitten 13 wird der vordere Verschlußspriegel 12 nach vorne verstellt, wodurch das Verdeck 4 gestreckt wird. Gleichzeitig schwenkt das betreffende Koppelglied 17 um den Gelenkstift 22 nach unten. Der Koppelgliedschieber 10 kann nach vorne wandern. Es erfolgt ein Bewegungsablauf entsprechend den Figuren 8 und 3.

Wenn das hintere Ende 30B des Kulissenschlitzes 30 mit dem Kulissenstift 28 in Eingriff kommt, wird das Verdeck 4 zwischen dem Führungsspriegel 15 und dem zugehörigen Faltspriegel 16 entsprechend Fig. 3 gestreckt.

Der nächstfolgende Führungsspriegelschieber 9 wird über das Verdeck 4 nach vorne mitgenommen. Entsprechende Funktionsabläufe ergeben sich für die nachfolgenden Spriegelpaare. Dabei wird die Dachöffnung 3 mittels des Verdecks 4 verschlossen, wie dies in Fig. 1 dargestellt ist. Im voll geschlossenen Zustand stehen der Führungsspriegel 15 und der Führungsspriegelschieber 9 mit der Führungsschiene 8 über den Gleitschuh 9 entsprechend Fig. 3 in Eingriff. Auch ein Eingriff zwischen dem Faltspriegel 16 und der Führungsschiene 18 ist über das Koppelglied 17, den Kulissenschlitz 28, den Kulissenstift 30, den Koppelgliedschieber 10 und die Führungsrolle 24 sichergestellt, wodurch unerwünschte Verstellbewegungen der Spriegel in lotrechter Richtung verhindert werden.

Die Faltspriegel 16 und die Führungsspriegel 15 können keine Flatterbewegungen ausführen. Das Verdeck 4 wird in festem Eingriff mit der Dachöffnung 3 gehalten. Die Dachöffnung 3 wird auf diese Weise stabil und vollständig abgedichtet. Der Schiebehimmel 11 kann für sich frei geöffnet und geschlossen werden, ohne mit dem Verdeck oder der Verstellmechanik des Verdecks in störenden Eingriff zu kommen.

Die vorliegende Erfindung ist nicht auf das vorliegend im einzelnen erläuterte Ausführungsbeispiel beschränkt. Beispielsweise kann eine Höhenverstellvorrichtung A vorgesehen werden, bei welcher der Kulissenstift 28 mit dem Koppelglied 17 verbunden ist, während der Kulissenschlitz 30 oder eine andere Nockenbahn an dem Koppelgliedschieber 10 ausgebildet sein kann. Was die Anschlagfreigabevorrichtung B anbelangt, kann sich das Anlageteil nach vorne und hinten oder in lotrechter Richtung mit Bezug auf den Koppelgliedschieber 10 in Abhängigkeit von der Verstellbewegung des Führungsspriegelschiebers 9 bewegen, um von dem Anschlag 34 freizukommen. Im Falle der Verriegelungsvorrichtung C kann der Stift 20 auch an dem Koppelgliedschieber 10 sitzen, während eine mit dem Stift 20 in Eingriff kommende Aufnahme an dem Führungsspriegelschieber 9 ausgebildet sein kann. Der Faltspriegel kann auch durch den gegenseitigen Eingriff von Kulissenstift 28 und Kulissenschlitz 30 verriegelt werden. Was die Mitnehmervorrichtung D anbelangt, kann der Koppelgliedschieber 10 nach vorne zwangsverstellt werden, wenn der Kulissenstift 28 das hintere Ende 30B des Kulissenschlitzes 30 erreicht, so daß auf die Aufnahme 26A verzichtet werden kann.

## Patentansprüche

1. Faltdach für Fahrzeuge zum wahlweisen Verschließen oder mindestens teilweisen Freigeben einer in einer festen Dachfläche (2) ausgebildeten Dachöffnung (3), mit einem Verdeck (4), das auf einer wechselnden Folge von Faltspriegeln (16) und Führungsspriegeln (15) abgestützt ist, wobei die Führungsspriegel (15) beidseits an je einem entlang einer Längsführung (8) verschiebbaren Führungsspriegelschieber (9) abgestützt sind und die Faltspriegel (16) beidseits über je ein Koppelglied (17) mit einem gleichfalls in Verdecklängsrichtung verstellbaren Schlitten (13) bzw. einem der Führungsspriegelschieber (9) derart gekoppelt sind, daß das Verdeck (4) durch Verschieben des Schlittens (13) beim Schließen gestreckt bzw. beim Öffnen gefaltet wird, gekennzeichnet durch den Koppelgliedern (17) zugeordnete Koppelgliedschieber (10), die sowohl verschwenkbar als auch entlang der Längsführung (8) verschiebbar sind und die mit dem jeweils zugehörigen Koppelglied (17) über eine Höhenverstellvorrichtung (A) verbunden sind, die für eine Höhenverstellung des betreffenden Koppelgliedes (17) in Abhängigkeit von einer gegenseitigen Längsbewegung von Koppelglied und Höhenverstellvorrichtung sorgt; durch einen mit den Koppelgliedschiebern (10) zusammenwirkenden, mit Bezug auf die Längsführung (8) feststehenden Anschlag (34), der bei geschlossenem Verdeck (4) auf der in Öffnungsrichtung liegenden Seite der Koppelgliedschieber (10) sitzt; und durch eine Anschlagfreigabevorrichtung (B) zum Lösen des gegenseitigen Eingriffes zwischen den einzelnen Koppelgliedschiebern (10) und dem Anschlag (34), wenn der zugehörige Schlitten (13) bzw. Führungsspriegelschieber (9) in Öffnungsrichtung verstellt und näher an den betreffenden Koppelgliedschieber (10) herangebracht wird.

2. Faltdach nach Anspruch 1 mit einer Verriegelungsvorrichtung (C), die ein Absenken eines ausgestellten Koppelgliedes (17) verhindert, wenn der zugehörige Schlitten (13) bzw. Führungsspriegelschieber (9) in Öffnungsrichtung verstellt und noch näher an den betreffenden Koppelgliedschieber (10) herangebracht wird.

3. Faltdach nach Anspruch 1 oder 2, bei welchem die Höhenverstellvorrichtung (B) einen in dem Koppelglied (17) ausgebildeten Kulissenschlitz (30) und einen entlang diesem Kulissenschlitz verstellbar geführten Kulissenstift (28) aufweist, der an dem Koppelgliedschieber (10) angebracht ist.

4. Faltdach nach einem der vorhergehenden Ansprüche, bei welchem die Anschlagfreigabevorrichtung (B) ein mit dem Schlitten (13) bzw. den Führungsspriegelschiebern (9) verbundenes Anlageteil (20) und eine an dem betreffenden Koppelgliedschieber (10) ausgebildete Nase (26) aufweist, durch deren Zusammenwirken der Koppelgliedschieber (10) so weit gekippt wird, daß ein mit dem Anschlag (34) zusammenwirkendes Anlageteil (25) des Koppelgliedschiebers (10) von dem Anschlag (34) freikommt.

5. Faltdach nach Anspruch 2, bei welchem die Verriegelungsvorrichtung (C) ein mit dem Schlitten (13) bzw. den Führungsspriegelschiebern (9) verbundenes Anlageteil (20) und eine an dem Koppelgliedschieber (10) ausgebildete weitere Nase (38) aufweist.

6. Faltdach nach einem der vorhergehenden Ansprüche mit einer Mitnehmervorrichtung (D) zum gegenseitigen Koppeln des Schlittens (13) bzw. der Führungsspriegelschieber (9) mit dem zugehörigen Koppelgliedschieber (10) beim Schließen des Verdecks (4), bis der betreffende Koppelgliedschieber (10) den Anschlag (34) erreicht.

7. Faltdach nach Anspruch 6, bei welchem die Mitnehmervorrichtung (D) ein mit dem Schlitten (13) bzw. den Führungsspriegelschiebern (9) verbundenes Anlageteil (20) und eine an dem betreffenden Koppelgliedschieber (10) ausgebildete Nase (26) aufweist, die durch Kippen des Koppelgliedschiebers (10) in und außer Eingriff miteinander gebracht werden können.

8. Faltdach nach Ansprüchen 4 und 5, bei welchem ein und dasselbe Anlageteil (20) Bestandteil sowohl der Anschlagfreigabevorrichtung (B) als auch der Verriegelungsvorrichtung (C) ist.

9. Faltdach nach Ansprüchen 5 und 6, bei welchem ein und dasselbe Anlageteil (20) Bestandteil sowohl der Verriegelungsvorrichtung (C) als auch der Mitnehmervorrichtung (D) ist.

10. Faltdach nach Ansprüchen 4, 5 und 7, bei welchem ein und dasselbe Anlageteil (20) Bestandteil sowohl der Anschlagfreigabevorrichtung (B) als auch der Verriegelungsvorrichtung (C) und der Mitnehmervorrichtung (D) ist.

## Claims

1. A folding roof for vehicles for optionally closing, or at least partially opening a roof aperture (3) constructed in a fixed roof area (2), with a covering (4) which is connected to an alternating sequence of fold supports (16) and guide supports (15), the guide supports (15) being braced at both ends in respective guide support slides (9) adapted for displacement along a longitudinal guide (8), the fold supports (16) being at each end coupled by respective coupling members (17) to a guide support slider (9) or carriage (13) adapted for displacement in the longitudinal direction of the covering in such a way that the covering (4) is stretched by displacements of the carriage (13) during closure and folded during opening, characterised by, associated with the coupling members (17), coupling member sliders (10) which are both pivotable and also capable of displacement along the longitudinal guide (8) and which are connected to the respectively associated coupling member (17) via a height-adjusting device (A) for adjusting the height of the respective coupling member (17) as a function of a reciprocal longitudinal movement of coupling member and height adjusting device by an abutment (34) fixed in respect of the longitudinal guide (8) and cooperating with the coupling member sliders (10) and which, when the covering (4) is closed, is seated on that side of the coupling member slider (10) which is in the opening direction, and by an abutment release device (B) for releasing the reciprocal engagement between the individual coupling member sliders (10) and the abutment (34) when the associated carriage (13) or guide support slider (9) moves in the opening direction and approaches the respective coupling member slider (10).

2. A folding roof according to Claim 1, with an interlocking device (C) which prevents a lowering of a pushed-out coupling member (17) when the associated carriage (13) or guide support slider (9) is displaced in the direction of opening and is brought more closely to the relevant coupling member slider (10).

3. A folding roof according to Claim 1 or 2, in which the height-adjusting device (B) comprises a link slot (30) constructed in the coupling member (17) and a link pin (28) guided for displacement along this link slot and which is mounted on the coupling member slider (10).

4. A folding roof according to one of the preceding claims, in which the abutment release device (B) comprises a bearing part (20) connected to the carriage (13) and/or guide support sliders (9) and a nose (26) constructed on the respective coupling member slider (10) by the cooperation of which the coupling member slider (10) is tilted sufficiently that a bearing part (25) of the coupling member slider (10) cooperating with the abutment (34) becomes disengaged from the abutment (34).

5. A folding roof according to Claim 2, in which the interlocking device (C) comprises a bearing part (20) connected to the carriage (13) and/or the guide support sliders (9) and a further nose (38) constructed on the coupling member slider (10).

6. A folding roof according to one of the preceding claims, with an entraining device (D) for reciprocal coupling of the carriage (13) or the guide support sliders (9) with the associated coupling member sliders (10) upon closing of the covering (4) until the relevant coupling member slider (10) reaches the abutment (34).

7. A folding roof according to Claim 6, in which the entraining device (D) comprises an abutment part (20) connected to the carriage (13) or guide support sliders (9) and a nose (26) constructed on the respective coupling member slider (10) and which can be brought into and out of engagement with one another by tilting of the coupling member slider (10).

8. A folding roof according to Claims 4 and 5, in which one and the same bearing part (20) is a constituent part of both the abutment release device (B) and also of the interlocking device (C).

9. A folding roof according to Claims 5 and 6, in which one and the same bearing part (20) is a constituent part of both the interlocking device (C) and also of the entraining device (D).

10. A folding roof according to Claims 4, 5 and 7 in which one and the same bearing part (20) is a constituent part both of the abutment release device (B) and also of the interlocking device (C) and of the entraining device (D).

## Revendications

1. Toit pliant pour véhicule, permettant au choix de fermer ou de libérer au moins partiellement une ouverture (3) pratiquée dans un toit rigide (2), au moyen d'une capote (4) supportée alternativement par des arceaux de pliage (16) et des arceaux de guidage (15), ces derniers étant portés à chaque extrémités par un coulisseau (9) se déplaçant dans un guide longitudinal (8) tandis que les arceaux de pliage (16) sont reliés à chaque extrémité par un organe d'accouplement (17) à un traîneau (13) mobile également selon la direction longitudinale de la capote ou à un des coulisseaux d'arceau de guidage (9) de manière que la capote (4) se tend, lorsqu'on fait coulisser le traîneau (13) dans le sens de la fermeture, tandis qu'elle se plie quand on agit dans le sens d'ouverture, toit pliant caractérisé en ce que aux organes d'accouplement (17) sont associés des coulisseaux (10) d'accouplement qui peuvent aussi bien basculer que se déplacer en suivant le guide longitudinal (8) et qui sont reliés à l'organe d'accouplement correspondant (17) par un dispositif (A) de levage qui produit une élévation de l'organe d'accouplement (17) concerné en fonction du déplacement réciproque longitudinal de cet organe d'accouplement et du dispositif de levage, avec les coulisseaux (10) d'accouplement coopère une butée (34) fixe par rapport au guide longitudinal (8) et qui se trouve, lorsque la capote (4) est fermée, du côté du coulisseau (10) situé dans le sens d'ouverture, un dispositif (B) de libération de butée sert à rompre la prise existant entre les différents coulisseaux (10) d'accouplement et la butée (34) lorsque le traîneau (13) ou le coulisseau d'arceau de guidage (9) correspondant est déplacé dans le sens d'ouverture et rapproché du coulisseau (10) correspondant.

2. Toit pliant selon la revendication 1, caractérisé en ce qu'il comporte un dispositif de verrouillage (C) empêchant la descente d'un organe d'accouplement (17) déployé, lorsque le traîneau (13) ou le coulisseau d'arceau de guidage (9) correspondant est déplacé dans le sens d'ouverture et rapproché encore davantage du coulisseau d'accouplement (10) correspondant.

3. Toit pliant selon la revendication 1 ou 2, caractérisé en ce que le dispositif de libération de butée (B) comporte, dans l'organe d'accouplement (17), une fente de coulissement dans laquelle peut se déplacer une tige de coulissement (28) portée par le coulisseau (10) d'accouplement.

4. Toit pliant selon une des revendications précédentes, caractérisé en ce que le dispositif de libération de butée (B) comprend une pièce rapportée (20) reliée au traîneau (13) et sur chacun des coulisseaux (9) pièce qui, par coopération avec une dent (26) sur le coulisseau d'accouplement (10) correspondant fait basculer le coulisseau (10) jusqu'à ce qu'une pièce rapportée (25) du coulisseau (10) coopérant avec la butée (34) soit libérée de cette butée.

5. Toit pliant selon la revendication 2, caractérisé en ce que le dispositif de verrouillage (C) comporte une pièce rapportée (20) reliée au traîneau (13) et sur chacun des coulisseaux d'arceaux de guidage (9), ainsi qu'une seconde dent (38) sur le coulisseau (10).

6. Toit pliant selon une des revendications précédentes, caractérisé en ce qu'il comporte un dispositif d'entraînement (D) servant à accoupler le traîneau (13) ou le coulisseau d'arceau de guidage (9), au coulisseau (10) correspondant, lors de la fermeture de la capote (4) jusqu'à ce que le coulisseau (10) concerné atteigne la butée (34).

7. Toit pliant selon la revendication 6, caractérisé en ce que le dispositif d'entraînement (D) comporte sur le traîneau (13) et sur chacun des coulisseaux d'arceaux de guidage (9) une pièce rapportée (20), ainsi qu'une dent (26) sur le coulisseau (10) correspondant, ces éléments (20 et 26) étant mis en prise ou dégagés par basculement du coulisseau (10).

8. Toit pliant selon les revendications 4 et 5, caractérisé en ce qu'une seule et même pièce rapportée (20) appartient à la fois au dispositif de libération de butée (B) et au dispositif de verrouillage (C).

9. Toit pliant selon les revendications 5 et 6, caractérisé en ce qu'une seule et même pièce rapportée (20) appartient à la fois au dispositif de verrouillage (C) et au dispositif d'entraînement (D).

10. Toit pliant selon les revendications 4, 5 et 7, caractérisé en ce qu'une seule et même pièce rapportée (20) appartient aussi bien au dispositif de libération de butée (B) qu'au dispositif de verrouillage (C) et au dispositif d'entraînement (D).
